# EUROPEAN PATENT SPECIFICATION

(11) **EP 3 164 819 B1**
(45) Date of publication and mention of the grant of the patent: **26.10.2022**
(21) Application number: 15815274.4
(22) Date of filing: 18.03.2015
(51) Int. Cl.: G06F 17/40, G05B 23/02

(54) **ACQUISITION OF HIGH FREQUENCY DATA IN TRANSIENT DETECTION**
ERFASSUNG VON HOCHFREQUENTEN DATEN IN TRANSIENTER DETEKTION
ACQUISITION DE DONNÉES HAUTE FRÉQUENCE DANS UNE DÉTECTION TRANSITOIRE

(30) Priority: 03.07.2014 US 201462020620 P
(43) Date of publication of application: 10.05.2017
(73) Proprietor: General Electric Company, Schenectady, NY 12345 (US)
(72) Inventor: HUANG, Yuhang, Lisle, IL 60532 (US); HASIEWICZ, Joseph, Lisle, IL 60532 (US)
(74) Representative: Aronova
(86) International application number: PCT/US2015/021211
(87) International publication number: WO 2016/003501

(56) References cited:
- EP-A2- 2 256 319
- WO-A1-01/82008
- WO-A1-2008/145154
- WO-A2-01/16660
- WO-A2-02/057856
- US-A1- 2006 026 164
- US-A1- 2008 300 817
- US-A1- 2009 082 919
- US-A1- 2010 228 525
- US-A1- 2013 139 179
- US-A1- 2013 144 407
- US-A1- 2014 122 800
- GARCIA-ALVAREZ D ET AL: "Fault detection and isolation in transient states using principal component analysis", JOURNAL OF PROCESS CONTROL, OXFORD, GB, vol. 22, no. 3, 11 January 2012 (2012-01-11), pages 551-563, XP028463796, ISSN: 0959-1524, DOI: 10.1016/J.JPROCONT.2012.01.007 [retrieved on 2012-01-19]

## Description

### Background of the Invention

### Field of the Invention

The subject matter disclosed herein generally relates to the collection and processing of high-frequency data to monitor signals generated by industrial assets.

### Brief Description of the Related Art

In industrial control operations or models, equipment is monitored to ensure proper operation and/or detect anomalies which may arise. The monitoring devices may include any number of sensors which obtain and/or measure data points of the equipment. This sensor data is then used in cooperation with computing components that analyze the data for various purposes such as to provide operational or repair guidance.

For industrial assets equipped with sensors, a control system or analytic solution collects sensor data to monitor the operation of equipment in real-time. Traditionally, sensor data are collected from a "snapshot" buffer on a scheduled interval (e.g., every five or 10 minutes per asset implemented) which does create substantial network traffic. This traditional interval also is effective when monitoring data streams for gradual fault development. However, this relatively low acquisition frequency is inadequate for monitoring relatively fast developing transients which may require samples to be taken every 10 seconds such as upon starting up or shutting down an industrial asset.

As the number of assets being processed increases, combined with an increasing need to collect data at higher frequencies, it becomes difficult to efficiently collect data from these snapshot buffers. This in turn may cause network traffic to go and require more computational time and resources to be spent on data collection. Servers tasked with storing this data are also continually burdened for each acquisition cycle as data from all sensors are collected while only a small number are needed when a transient situation is not present.

Additionally, when a set of values constituting an observation are read from the snapshot buffer at a given time, the values of the individual sensors are not necessarily synchronous because values may not have been acquired at precisely the same time. Traditional models do not allow for data acquired from the snapshot buffer to be retrieved retrospectively. By an "observation' and as used herein it is meant a collection of sensor readings at a single instant in time.

When recording observations at the higher rate, a large amount of storage becomes necessary. By discriminating between observations that belong to a transient and those that do not, the amount of storage is greatly reduced because transients occur irregularly and are relatively short in duration. However, this solution remains less than ideal if the observations containing the mode transition are not recorded, so two observations are recorded before the transient begins and two after the transient ends. In real time monitoring, the analytics solution must have a high availability in order to avoid missing part or all of a transient data stream. Sensor data that makes up observations can be lost if the analytic solution suddenly encounters multiple transients and cannot keep up with the load or experiences network issues.

The above-mentioned problems have resulted in some user dissatisfaction with previous approaches. Accordingly, it is desired to reduce the size of the historical data while preserving relevant contextual information.

WO 01/16660 relates to a computerized machine controller diagnostic system.

### Brief Description of the Invention

The approaches described herein provide systems and related methods that allow for the collection and processing of high-frequency data used to monitor transient signals or tags generated by an industrial asset upon transitioning from one state to another. The approaches described herein may read the tags containing sensor data in a number of acquisition steps such as a batch or single observation. A minimum number of tags needed to be observed during the acquisition is determined, and it is further determined through an iterative process whether a valid operating state or mode exists within the specified data set.

If a valid operating state is not detected, the acquisition process proceeds while observing the minimum number of tags required to detect a valid operating state transition. Upon detecting a new and valid operating state, the approaches switch to observe single data vectors using the entire number of tags necessary to accurately monitor the state transition of the industrial asset. The approaches described automatically adjust the data collection schedule to obtain any missed data due to system, networking, or other issues.

In some approaches, an apparatus for the acquisition of high frequency data in transient detection is provided which includes an interface having an input and an output and a control circuit coupled thereto. The control circuit is configured to collect, via the input, a group of historical data relating to operation of an industrial asset on or over a timed interval and determine whether the collected group of historical data corresponds to a transitory period of the industrial asset. Upon the control circuit determining the collected group of historical data corresponds to a transitory period, the control circuit is configured to read a full set of sensor values and make them available to an analytics engine via the output. Upon the control circuit determining the collected group of historical data does not correspond to the transitory period, the control circuit reads and stores a minimal subset of sensor values necessary to detect a start or an end of the transitory period via the input. In some approaches, the control circuit is configured to iteratively collect and determine data on an observation-by-observation basis.

In some of these approaches, when the collected group of historical data does not correspond to the transitory period, upon the control circuit subsequently determining that the start of the transitory period has not occurred, the control circuit is configured to store a minimal subset of sensor values necessary to detect the start or the end of the transitory period.

In some approaches, when the collected group of historical data does not correspond to the transitory period, upon the control circuit subsequently determining that the start of the transitory period has occurred, the control circuit is configured to read remaining sensor values, create a full sensor value set, switch to a mode where the full set of sensor values is obtained, and make the full set of sensor values available to the analytics engine via the output.

According to the invention, the control circuit is further configured to determine whether the full set of sensor values corresponds to the end of the transitory period. Upon the control circuit determining the full set of sensor values does not correspond to the end of the transitory period, the control circuit is further configured to read and store a minimal subset of sensor values necessary to detect the end of the transitory period. Further, upon the control circuit determining the full set of sensor values corresponds to the end of the transitory period, the control circuit is configured to switch to reading a minimal subset of sensor values and storing the minimal subset of sensor values necessary to detect the start or the end of a subsequent transitory period.

In other approaches, a group of historical data relating to operation of an industrial asset on timed interval is collected and it is determined whether the collected group of historical data corresponds to a transitory period of the industrial asset. Upon the collected group of historical data corresponding to the transitory period, a full set of sensor values is read and made available to an analytics engine. When the collected group of historical data does not correspond to the transitory period, a minimal subset of sensor values necessary to detect a start or an end of the transitory period is read and stored.

Advantageously, network traffic may be dramatically reduced while improving server performance and reducing resource costs. The catch-up mechanism will increase availability of the system and allow the analytic solution to be more reliable and eliminate the possibility of missing a transient.

### Brief Description of the Drawings

For a more complete understanding of the disclosure, reference should be made to the following detailed description and accompanying drawings wherein:
FIG. 1 comprises a block diagram illustrating an exemplary system for acquisition of high frequency data in transient detection according to various embodiments of the present invention; and
FIG. 2 comprises an operational flow chart illustrating an approach for acquisition of high frequency data in transient detection according to various embodiments of the present invention.

Skilled artisans will appreciate that elements in the figures are illustrated for simplicity and clarity. It will further be appreciated that certain actions and/or steps may be described or depicted in a particular order of occurrence while those skilled in the art will understand that such specificity with respect to sequence is not actually required. It will also be understood that the terms and expressions used herein have the ordinary meaning as is accorded to such terms and expressions with respect to their corresponding respective areas of inquiry and study except where specific meanings have otherwise been set forth herein.

### Detailed Description of the Invention

Approaches are provided that overcome the time consuming and expensive process of retrieving and maintaining analyzing historical data sets relating to transient or transitional states of industrial assets. It is understood that by "transient" and/or "transitional state" and as used herein, it is meant the process in which an industrial asset transitions from one state to another. For instance, the industrial asset may transition from an inactive to an active state, an active to an inactive state, among other examples.

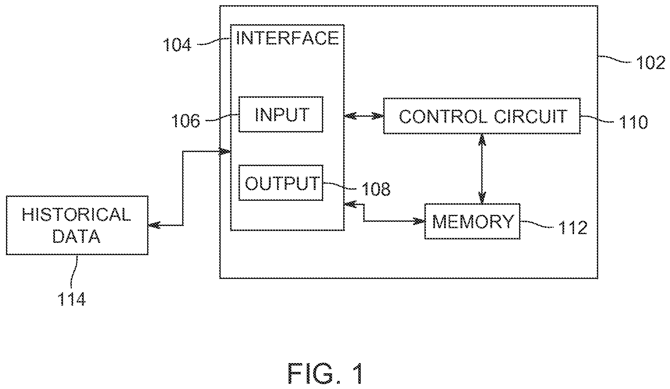

Referring now to FIG. 1, one example of a system 100 for acquisition of high frequency data in transient detection is described. The system 100 includes an apparatus 102 which includes an interface 104 having an input 106 and an output 108, a control circuit 110, a memory 112, and historical data 114. The historical data 114 may be stored in the memory 112 and may alternatively be a standalone component. The apparatus 102 may be stored on a cloud-based network.

The apparatus 102 is any combination of hardware devices and/or software selectively chosen to generate, display, and/or transmit communications. In one aspect, the interface 104 is a computer based program and/or hardware configured to accept a command at the input 106 and transmit the generated communication at the output 108. Thus, one function of the interface 104 is to allow the apparatus 102 to communicate with and receive the historical data 114, the control circuit 110, and the memory 112. The apparatus 102 may be deployed on the cloud or any other networking construct. By "cloud" and as used herein, it is meant any combination of networking components such as servers, switches, constructs, and/or other components used to provide network access to a number of systems. In some forms, the cloud may include multiple networks or apparatuses which serve different purposes in the system 100.

The memory 112 may be stored on the apparatus 102 or any known system. In some examples, a portion of the memory stores the original or decimated historical data 114 and is stored directly on the apparatus 102. Alternatively, the memory 112 may store the historical data 114 on a cloud-based device separate from the apparatus 102. It is understood that in some forms, only a portion of the memory 112 stores the historical data 114, and the remainder is stored at a remote location (e.g., on the cloud or another remote networking device).

In some forms, the apparatus 102 may be located on a local computing device which is any combination of hardware and/or software elements configured to execute a task. In some forms, the local computing device may be a remote networking control device accessible by the apparatus 102 and any number of additional computing devices. In some forms, the local computing device may communicate with cloud-based apparatuses and/or remote servers which networked to provide a centralized data storage access to services or resources.

The historical data 114 may be any combination of vectors, sensor data, and/or vector data relating to industrial assets. For example, the historical data 114 may be data obtained from any number of sensors configured to sense and obtain values relating to the operation of the asset. The historical data 114 may include vector data provided over a period of time, or "time-series data." By "time series data" and as used herein, it is meant data relating to the operation of the industrial system being obtained, presented, and/or organized in a sequential manner according to time. Thus, time series data allows for a user or system to measure a change in a characteristic of the industrial system over a provided period of time. This historical data 114 may be derived from pumps, turbines, diesel engines, jet engines, or other industrial systems having any number of sensors, gauges, and other components for measuring time series data. Other examples are possible.

The data structures utilized herein may utilize any type of programming construct or combination of constructs such as linked lists, tables, pointers, and arrays, to mention a few examples. Other examples are possible.

The control circuit 110 is a combination of hardware devices and/or software selectively chosen to monitor settings of the desired system and down sample the historical data 114. The control circuit 110 may be physically coupled to the interface 104 through a data connection (e.g., an Ethernet connection), or it may communicate with the interface 104 through any number of wireless communications protocols.

It will be appreciated that the various components described herein may be implemented using a general purpose processing device executing computer instructions stored in memory.

In operation, the control circuit 110 is configured to collect a group of historical data 114 relating to the operation of an industrial asset on a timed interval via the input 106. The control circuit 110 then is configured to determine whether the collected group of historical data corresponds to a transitory period of the industrial asset.

Upon the control circuit 110 determining the collected group of historical data 114 corresponds to a transitory period, the control circuit reads a full set of sensor values and makes them available to an analytics engine via the output 108. Upon the control circuit 110 determining the collected group of historical data 114 does not correspond to the transitory period, the control circuit 110 reads and stores a minimal subset of sensor values necessary to detect a start or an end of the transitory period via the input 106. The control circuit 110 may iteratively collect and determine data on an observation-by-observation basis.

In some forms, when the collected group of historical data 114 doesn't correspond to the transitory period, the control circuit 110 makes a subsequent determination as to whether a transient start is detected. Upon determining that the start of the transitory period has not occurred, the control circuit 110 is then configured to store a minimal subset of sensor values via the memory 112 necessary to detect the start or the end of the transitory period.

When the subsequent determination as to whether the transient start results in a detection, the control circuit 110 reads the remaining sensor values via the input 106 and creates a full sensor value set. The control circuit then switches to a mode in which the full set of sensor values is obtained and makes the full set of sensor values available to the analytics engine via the output 108.

According to the invention, the control circuit 110 is further configured to determine whether the full set of sensor values corresponds to the end of the transitory period. Upon determining the full set of sensor values does not correspond to the end of the transitory period, the control circuit 110 reads and stores a minimal subset of sensor values necessary to detect the end of the transitory period at the memory 112. However, upon determining the full set of sensor values does correspond to the end of the transitory period, the control circuit 110 switches to reading a minimal subset of sensor values and stores them to be used to detect the start or the end of a subsequent transitory period. In other words, the data will be preserved via the memory 112 for future use and comparisons.

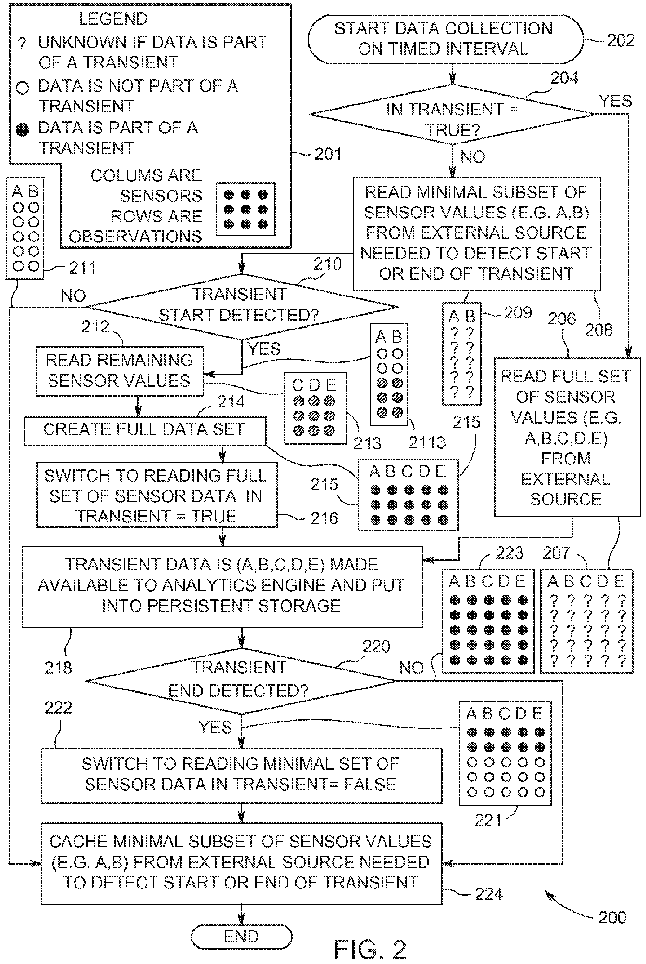

Referring now to FIG. 2, one example of an approach 200 for acquisition of high frequency data in transient detection is described. It will be understood that the approach 200 iterates through the data that it collects from external sources in batches. Those iterations are not shown in FIG. 2 in order to keep the diagram simple. In some aspects, portions of the approach 200 are conducted on an observation-by-observation basis. By an "observation' and as used herein it is meant a collection of sensor readings at a single instant in time.

Legend 201 illustrates different signals provided in the approach 200. For example, a question mark ("?") is used to designate whether a data set is unknown as to whether it is part of a transient, an open circle ("o") designates data not being part of the transient, and a closed circle ("∘") designates data being part of the transient. First, at step 202, a data collection begins on a timed interval. At step 204, a determination is made as to whether the data represents an asset being in a transient state. The indication of whether the data is in a transient state may be indicated by the data being within a certain range, the data changing from a first value or values to a second value or values. Other indications may also signify the data is in the transient state.

If the data represents an asset being in a transient state, the approach 200 proceeds to step 206 and as illustrated by data set 207, where a full set of sensor values are read. These values may be read from an external source such as a sensor or sensors coupled to the asset. The approach then proceeds to step 218.

If the data represents an asset not being in a transient state, the approach 200 proceeds to step 208, where a minimal subset of sensor values (e.g., sensors A and B shown in 209) necessary to detect a start or end of the transient are read. As seen in data set 209, it is unknown at this point whether the data is part of a transient, but data from the minimal number of sensors is obtained to make this determination.

At step 210, it is determined whether the minimal subset of sensor data represents a transient starting. If a transient start is not detected, as illustrated by data set 211A where the data are not representative of a part of the transient, the approach 200 proceeds to step 224 where a minimal subset of sensor values necessary to detect a start or end of the transient are stored or cached.

If a transient start is detected as illustrated in 211B, at step 212, remaining sensor values are read as illustrated in 213, Next, at step 214, a full data set is created that includes all of the relevant data relating to the transient. As seen in illustration 215, all of the data sets from the sensors include data which is part of the transient condition. At step 216, the approach 200 switches to reading the full set of sensor data so the remaining data is captured during the transient condition. At step 218, the transient data for any relevant sensors are made available to an analytics engine and put into a persistent storage.

At step 220, it is determined whether a transient end is detected. If a transient end is not detected, represented by data set 223 where incoming data is all part of the transient, the approach 200 proceeds to step 224 where a minimal subset of sensor values necessary to detect a start or end of the transient are stored or cached.

If a transient end is detected, represented by data set 221 where some of the incoming data is not part of the transient, the approach 200 proceeds to step 222 where a minimal set of sensor data necessary to determine the presence of a transient is again read. Finally, at step 224, a minimal subset of sensor values necessary to detect a start or end of the transient are stored or cached.

The approaches may include collecting any amount of sensor data, and may occur over any number of iterations. In other words, portions of the approach 200 (e.g., when a transient is not detected) may repeat every five minutes, while other portions (e.g., data collection during the transient) may occur at a much higher frequency. Further, this approach may occur on an observation-by-observation basis.

It will be appreciated by those skilled in the art that modifications to the foregoing embodiments may be made in various aspects. Other variations clearly would also work, and are within the scope of the invention. The present invention is set forth in the appended claims.

## Claims

1. A computer-implemented method, comprising:
collecting a group of historical data relating to operation of an industrial asset on timed interval:
determining whether the collected group of historical data corresponds to a transitory period of the industrial asset, wherein:
upon the collected group of historical data corresponding to the transitory period, reading a full set of sensor values and making the full set of sensor values available to an analytics engine;
when the collected group of historical data does not correspond to the transitory period, reading and storing a minimal subset of sensor values necessary to detect a start or an end of the transitory period ;
**characterised by**:
determining whether the full set of sensor values corresponds to the end of the transitory period;
wherein upon determining the full set of sensor values corresponds to the end of the transitory period, switching to reading a minimal subset of sensor values and storing the minimal subset of sensor values necessary to detect the start or the end of a subsequent transitory period.

2. The method of claim 1, wherein when the collected group of historical data does not correspond to the transitory period, upon subsequently determining that the start of the transitory period has not occurred, storing a minimal subset of sensor values necessary to detect the start or the end of the transitory period.

3. The method of claim 1, wherein when the collected group of historical data does not correspond to the transitory period, upon subsequently determining that the start of the transitory period has occurred:
reading remaining sensor values;
creating a full sensor value set;
switching to a mode where the full set of sensor values is obtained; and
making the full set of sensor values available to the analytics engine.

4. The method of claim 1, wherein upon determining the full set of sensor values does not correspond to the end of the transitory period, reading and storing a minimal subset of sensor values necessary to detect the end of the transitory period.

5. The method of claim 1, wherein the steps of collecting and determining are iteratively performed on an observation-by-observation basis.

6. An apparatus, comprising:
an interface (104) having an input (106) and an output (108); and
a control circuit (110) coupled to the interface (104);
wherein the control circuit (110) is configured to collect, via the input (106), a group of historical data (114) relating to operation of an industrial asset on a timed interval and determine whether the collected group of historical data corresponds to a transitory period of the industrial asset,
wherein upon the control circuit (110) determining the collected group of historical data corresponds to a transitory period, reading a full set of sensor values and making the full set of sensor values available to an analytics engine via the output (108),
wherein upon the control circuit (110) determining the collected group of historical data does not correspond to the transitory period,
reading and storing a minimal subset of sensor values necessary to detect a start or an end of the transitory period via the input (106),
**characterised in that**
the control circuit (110) is further configured to determine whether the full set of sensor values corresponds to the end of the transitory period,
and wherein upon the control circuit (110) determining the full set of sensor values corresponds to the end of the transitory period, the control circuit (110) is configured to switch to reading a minimal subset of sensor values and storing the minimal subset of sensor values necessary to detect the start or the end of a subsequent transitory period.

7. The apparatus of claim 6, wherein when the collected group of historical data does not correspond to the transitory period, upon the control circuit (110) subsequently determining that the start of the transitory period has not occurred, the control circuit (110) is configured to store a minimal subset of sensor values necessary to detect the start or the end of the transitory period.

8. The apparatus of claim 6, wherein when the collected group of historical data does not correspond to the transitory period, upon the control circuit (110) subsequently determining that the start of the transitory period has occurred, the control circuit (110) is configured to:
read remaining sensor values;
create a full sensor value set;
switch to a mode where the full set of sensor values is obtained; and
make the full set of sensor values available to the analytics engine via the output.

9. The apparatus of claim 6, wherein upon the control circuit (110) determining the full set of sensor values does not correspond to the end of the transitory period, the control circuit (110) is further configured to read and store a minimal subset of sensor values necessary to detect the end of the transitory period.

10. The apparatus of claim 6, wherein the control circuit (110) is configured to iteratively collect and determine data on an observation-by-observation basis.

## Patentansprüche

1. Computerimplementiertes Verfahren, das Folgendes umfasst:
Sammeln einer Gruppe historischer Daten über den Betrieb einer Industrieanlage in einem bestimmten Zeitintervall:
Bestimmen, ob die gesammelte Gruppe historischer Daten einem Übergangszeitraum der Industrieanlage entspricht, wobei:
auf der Grundlage der gesammelten Gruppe historischer Daten, die dem Übergangszeitraum entsprechen, ein vollständiger Satz von Sensorwerten gelesen und der vollständige Satz von Sensorwerten einer Analyse-Engine zur Verfügung gestellt wird;
wenn die gesammelte Gruppe historischer Daten nicht dem Übergangszeitraum entspricht, Lesen und Speichern einer minimalen Teilmenge von Sensorwerten, die erforderlich ist, um einen Beginn oder ein Ende des Übergangszeitraums zu erkennen;
**gekennzeichnet durch**:
Feststellen, ob der vollständige Satz von Sensorwerten dem Ende des Übergangszeitraums entspricht;
wobei nach der Feststellung, dass der vollständige Satz von Sensorwerten dem Ende des Übergangszeitraums entspricht, auf das Lesen einer minimalen Teilmenge von Sensorwerten und das Speichern der minimalen Teilmenge von Sensorwerten umgeschaltet wird, die erforderlich sind, um den Beginn oder das Ende eines nachfolgenden Übergangszeitraums zu erfassen.

2. Verfahren nach Anspruch 1, wobei, wenn die gesammelte Gruppe historischer Daten nicht dem Übergangszeitraum entspricht, bei der anschließenden Feststellung, dass der Beginn des Übergangszeitraums nicht eingetreten ist, eine minimale Teilmenge von Sensorwerten gespeichert wird, die erforderlich ist, um den Beginn oder das Ende des Übergangszeitraums zu erkennen.

3. Verfahren nach Anspruch 1, wobei, wenn die gesammelte Gruppe historischer Daten nicht dem Übergangszeitraum entspricht, anschließend festgestellt wird, dass der Beginn des Übergangszeitraums eingetreten ist:
Lesen der restlichen Sensorwerte;
Erstellen eines vollständigen Sensorwertsatzes;
Umschalten auf einen Modus, in dem der vollständige Satz von Sensorwerten erhalten wird; und
Bereitstellen des vollständigen Satzes von Sensorwerten für die Analyse-Engine.

4. Verfahren nach Anspruch 1, wobei nach der Feststellung, dass der vollständige Satz von Sensorwerten nicht dem Ende des Übergangszeitraums entspricht, eine minimale Teilmenge von Sensorwerten gelesen und gespeichert wird, die erforderlich ist, um das Ende des Übergangszeitraums zu erkennen.

5. Verfahren nach Anspruch 1, wobei die Schritte des Sammelns und Bestimmens iterativ auf einer Beobachtungsbasis für jede einzelne Beobachtung durchgeführt werden.

6. Vorrichtung, die Folgendes umfasst:
eine Schnittstelle (104) mit einem Eingang (106) und einem Ausgang (108); und
eine Steuerschaltung (110), die mit der Schnittstelle (104) gekoppelt ist;
wobei die Steuerschaltung (110) so ausgebildet ist, dass sie über den Eingang (106) eine Gruppe historischer Daten (114) sammelt, die sich auf den Betrieb einer Industrieanlage in einem zeitlichen Intervall beziehen, und bestimmt, ob die gesammelte Gruppe historischer Daten einem Übergangszeitraum der Industrieanlage entspricht,
wobei die Steuerschaltung (110) bei der Feststellung, dass die gesammelte Gruppe historischer Daten einem Übergangszeitraum entspricht, einen vollständigen Satz von Sensorwerten ausliest und den vollständigen Satz von Sensorwerten über den Ausgang (108) einer Analyse-Engine zur Verfügung stellt,
wobei, wenn die Steuerschaltung (110) feststellt, dass die gesammelte Gruppe historischer Daten nicht dem Übergangszeitraum entspricht,
eine minimale Teilmenge von Sensorwerten gelesen und gespeichert wird, die erforderlich sind, um einen Beginn oder ein Ende des Übergangszeitraums über den Eingang (106) zu erkennen,
**dadurch gekennzeichnet, dass**
die Steuerschaltung (110) ferner so ausgebildet ist, dass sie feststellt, ob der vollständige Satz von Sensorwerten dem Ende des Übergangszeitraums entspricht, und
wobei, wenn die Steuerschaltung (110) feststellt, dass der vollständige Satz von Sensorwerten dem Ende des Übergangszeitraums entspricht, die Steuerschaltung (110) so ausgebildet ist, dass sie auf das Lesen einer minimalen Teilmenge von Sensorwerten und das Speichern der minimalen Teilmenge von Sensorwerten umschaltet, die erforderlich sind, um den Beginn oder das Ende eines nachfolgenden Übergangszeitraums zu erfassen.

7. Vorrichtung nach Anspruch 6, wobei, wenn die gesammelte Gruppe historischer Daten nicht dem Übergangszeitraum entspricht, die Steuerschaltung (110), wenn sie anschließend feststellt, dass der Beginn des Übergangszeitraums nicht eingetreten ist, so ausgebildet ist, dass sie eine minimale Teilmenge von Sensorwerten speichert, die erforderlich ist, um den Beginn oder das Ende des Übergangszeitraums zu erkennen.

8. Vorrichtung nach Anspruch 6, wobei, wenn die gesammelte Gruppe historischer Daten nicht dem Übergangszeitraum entspricht, die Steuerschaltung (110) bei der anschließenden Feststellung, dass der Beginn des Übergangszeitraums eingetreten ist, für Folgendes ausgebildet ist:
Lesen der restlichen Sensorwerte;
Erstellen eines vollständigen Sensorwertsatzes;
Umschalten auf einen Modus, in dem der vollständige Satz von Sensorwerten erhalten wird; und
Bereitstellen des vollständigen Satzes von Sensorwerten für die Analyse-Engine über die Ausgabe.

9. Vorrichtung nach Anspruch 6, wobei die Steuerschaltung (110), wenn sie feststellt, dass der vollständige Satz von Sensorwerten nicht dem Ende des Übergangszeitraums entspricht, ferner so ausgebildet ist, dass sie eine minimale Teilmenge von Sensorwerten liest und speichert, der erforderlich ist, um das Ende des Übergangszeitraums zu erkennen.

10. Vorrichtung nach Anspruch 6, wobei die Steuerschaltung (110) so ausgebildet ist, dass sie iterativ Daten auf einer Beobachtungsbasis sammelt und bestimmt.

## Revendications

1. Procédé mis en œuvre par ordinateur, comprenant :
la collecte d'un groupe de données historiques concernant le fonctionnement d'un actif industriel au cours d'un intervalle de temps donné ;
la détermination du fait que le groupe collecté de données historiques correspond ou non à une période transitoire de l'actif industriel, dans lequel :
lorsque le groupe collecté de données historiques correspond à la période transitoire, un ensemble complet de valeurs de capteur est lu et l'ensemble complet de valeurs de capteur est rendu disponible à un moteur d'analyse ;
lorsque le groupe collecté de données historiques ne correspond pas à la période transitoire, un sous-ensemble minimal de valeurs de capteur nécessaire pour détecter un début ou une fin de la période transitoire est lu et stocké ;
**caractérisé par** :
la détermination du fait que l'ensemble complet de valeurs de capteur correspond ou non à la fin de la période transitoire ;
dans lequel, lorsqu'il est déterminé que l'ensemble complet de valeurs de capteur correspond à la fin de la période transitoire, un passage est effectué à la lecture d'un sous-ensemble minimal de valeurs de capteur et au stockage du sous-ensemble minimal de valeurs de capteur nécessaire pour détecter le début ou la fin d'une période transitoire suivante.

2. Procédé selon la revendication 1, dans lequel, lorsque le groupe collecté de données historiques ne correspond pas à la période transitoire, lorsqu'il est ensuite déterminé que le début de la période transitoire n'a pas eu lieu, un sous-ensemble minimal de valeurs de capteur nécessaire pour détecter le début ou la fin de la période transitoire est stocké.

3. Procédé selon la revendication 1, dans lequel, lorsque le groupe collecté de données historiques ne correspond pas à la période transitoire, lorsqu'il est ensuite déterminé que le début de la période transitoire a eu lieu :
des valeurs de capteur restantes sont lues ;
un ensemble complet de valeurs de capteur est créé ;
un passage à un mode où l'ensemble complet de valeurs de capteur est obtenu est effectué ; et
l'ensemble complet de valeurs de capteur est rendu disponible au moteur d'analyse.

4. Procédé selon la revendication 1, dans lequel, après qu'il a été déterminé que l'ensemble complet de valeurs de capteur ne correspond pas à la fin de la période transitoire, un sous-ensemble minimal de valeurs de capteur nécessaire pour détecter la fin de la période transitoire est lu et stocké.

5. Procédé selon la revendication 1, dans lequel les étapes de collecte et de détermination sont effectuées de manière itérative observation par observation.

6. Appareil, comprenant :
une interface (104) ayant une entrée (106) et une sortie (108) ; et
un circuit de commande (110) couplé à l'interface (104) ; dans lequel le circuit de commande (110) est configuré pour collecter, par l'intermédiaire de l'entrée (106), un groupe de données historiques (114) concernant le fonctionnement d'un actif industriel au cours d'un intervalle de temps donné et déterminer si le groupe collecté de données historiques correspond ou non à une période transitoire de l'actif industriel,
dans lequel, lorsque le circuit de commande (110) détermine que le groupe collecté de données historiques correspond à une période transitoire, un ensemble complet de valeurs de capteur est lu et l'ensemble complet de valeurs de capteur est rendu disponible à un moteur d'analyse par l'intermédiaire de la sortie (108),
dans lequel, lorsque le circuit de commande (110) détermine que le groupe collecté de données historiques ne correspond pas à la période transitoire,
un sous-ensemble minimal de valeurs de capteur nécessaire pour détecter un début ou une fin de la période transitoire est lu ou stocké par l'intermédiaire de l'entrée (106),
**caractérisé en ce que**
le circuit de commande (110) est en outre configuré pour déterminer si l'ensemble complet de valeurs de capteur correspond ou non à la fin de la période transitoire,
et dans lequel, lorsque le circuit de commande (110) détermine que l'ensemble complet de valeurs de capteur correspond à la fin de la période transitoire, le circuit de commande (110) est configuré pour passer à la lecture d'un sous-ensemble minimal de valeurs de capteur et au stockage du sous-ensemble minimal de valeurs de capteur nécessaire pour détecter le début ou la fin d'une période transitoire suivante.

7. Appareil selon la revendication 6, dans lequel, lorsque le groupe collecté de données historiques ne correspond pas à la période transitoire, lorsque le circuit de commande (110) détermine ensuite que le début de la période transitoire n'a pas eu lieu, le circuit de commande (110) est configuré pour stocker un sous-ensemble minimal de valeurs de capteur nécessaire pour détecter le début ou la fin de la période transitoire.

8. Appareil selon la revendication 6, dans lequel, lorsque le groupe collecté de données historiques ne correspond pas à la période transitoire, lorsque le circuit de commande (110) détermine ensuite que le début de la période transitoire a eu lieu, le circuit de commande (110) est configuré pour :
lire des valeurs de capteur restantes ;
créer un ensemble complet de valeurs de capteur ;
passer à un mode où l'ensemble complet de valeurs de capteur est obtenu ; et
rendre l'ensemble de valeurs de capteur disponible au moteur d'analyse par l'intermédiaire de la sortie.

9. Appareil selon la revendication 6, dans lequel, lorsque le circuit de commande (110) détermine que l'ensemble complet de valeurs de capteur ne correspond pas à la fin de la période transitoire, le circuit de commande (110) est en outre configuré pour lire et stocker un sous-ensemble minimal de valeurs de capteur nécessaire pour détecter la fin de la période transitoire.

10. Appareil selon la revendication 6, dans lequel le circuit de commande (110) est configuré pour collecter et déterminer de manière itérative des données observation par observation.
